# EUROPÄISCHE PATENTSCHRIFT

(11) **EP 1 192 586 B1**
(45) Veröffentlichungstag und Bekanntmachung des Hinweises auf die Patenterteilung: **06.08.2003**
(21) Anmeldenummer: 00941936.7
(22) Anmeldetag: 31.05.2000
(51) Int. Cl.: G06K 11/18

(54) **BEDIENVORRICHTUNG FÜR EIN ELEKTRISCHES GERÄT**
ACTUATING DEVICE FOR AN ELECTRIC APPARATUS
DISPOSITIF DE COMMANDE POUR UN APPAREIL ELECTRIQUE

(30) Priorität: 11.06.1999 DE 19926597
(43) Veröffentlichungstag der Anmeldung: 03.04.2002
(73) Patentinhaber: ROBERT BOSCH GMBH, 70442 Stuttgart (DE)
(72) Erfinder: ESCHLER, Johannes, D-71254 Ditzingen (DE); HAUK, Markus, D-71696 Möglingen (DE); SCHIRMER, Jürgen, D-69124 Heidelberg (DE)
(86) Internationale Anmeldenummer: DE0001781
(87) Internationale Veröffentlichungsnummer: WO00077721

(56) Entgegenhaltungen:
- EP-A- 0 520 089
- EP-A- 0 789 321
- WO-A-97/25657
- DE-A- 3 828 416
- "MOUSE BALL-ACTUATING DEVICE WITH FORCE AND TACTILE FEEDBACK" IBM TECHNICAL DISCLOSURE BULLETIN,US,IBM CORP. NEW YORK, Bd. 32, Nr. 9B, 1. Februar 1990 (1990-02-01), Seiten 230-235, XP000082319 ISSN: 0018-8689

## Beschreibung

### Stand der Technik

Die Erfindung geht von einer Bedienvorrichtung nach der Gattung des Hauptanspruchs aus.

Für Personalcomputer sind bereits Bedienvorrichtungen, beispielsweise in Form einer sogenannten Computermaus oder eines Trackballs, bekannt, die ein kugelförmiges Bedienelement aufweisen. Diese werden in der Regel für zweidimensionale Eingaben, beispielsweise zur Steuerung der Position eines Zeigers innerhalb eines auf einem Computerbildschirm dargestellten zweidimensionalen Menüs, verwendet. Das kugelförmige Bedienelement in einer solchen bekannten Bedienvorrichtung ist dabei gewöhnlich so gelagert, daß eine translatorische Bewegung der Kugel innerhalb des sie umgebenden Gehäuses im wesentlichen unterbunden ist.

Weiterhin ist aus der WO-A-98/54670 eine Bedienvorrichtung mit einem kugelförmigen Bedienelement in Form eines rastbaren Trackballs bekannt, wobei das dort beschriebene kugelförmige Bedienelement an seiner Oberfläche muldenförmige Vertiefungen aufweist, in die Rastelemente einrasten. Dies ermöglicht für den Bediener eine verbesserte haptische Rückmeldung betreffend das Maß der Verstellung des mit dem kugelförmigen Bedienelements verstellten Parameters. Eine visuelle Kontrolle des zu verstellenden Parameters ist damit unter Umständen verzichtbar. Damit eignet sich die beschriebene Vorrichtung besonders für einen Einsatz in solchen Geräten, bei denen eine visuelle Kontrolle der zu verstellenden Parameter nicht möglich oder erschwert ist.

EP-A-0 789 321, WO-A-97/25657 und IBM Technical Disclosure Bulletin, vol. 32, no. 9B, Febr. 1990: "Mouse ball-actuating device with force and tactile feedback"offenbaren jeweils eine Bedienvorrichtung für ein elektrisches Gerät, die ein mit der Hand bedienbares kugelförmiges Bedienelement aufweist, das um mindestens eine Achse drehbar gelagert ist, wobei ferner elektrisch angesteuerte Mittel vorgesehen sind, die das für die Drehung des Bedienelements erforderliche Drehmoment derart beeinflussen, dass dieses während des Drehens des Bedienelements periodisch vergrößert wird, so dass eine für die Hand des Bedieners spürbare Rückmeldung entsteht.

In EP-A-0 789 321 wird ein Stempel elektromagnetisch gegen das kugelförmige Bedienelement gepresst, wodurch das zur Drehung des kugelförmigen Bedienelements erhöht wird. Weiter ist offenbart, dass das Drehmoment soweit erhöhbar ist, dass eine Drehung des Bedienelements um eine von zwei möglichen Drehachsen vollständig verhindert wird.

In WO-A-97/25657 ist ein Trackball-Bedienvorrichtung angegeben, deren Kugel reibschlüssig mit zwei zueinander orthogonalen Achsen reibschlüssig verbunden ist. Mit jeder der Achsen ist ein elektrisch ansteuerbarer Motor verbunden, der als Bremsmomenterzeuger geschaltet ist. Während des Drehens der Kugel und damit der Steuerung eines Cursors in einem Kontext wird das Bremsmoment in Abhängigkeit des Kontextes verändert, insbesondere periodisch erhöht und dadurch ein haptisches Rückmeldesignal erzeugt. Der Anspruch 1 ist gegen dieses Dokument abgegrenzt.

IBM Technical Disclosure Bulletin, vol. 32, no. 9B, Febr. 1990: "Mouse ball-actuating device with force and tactile feedback" offenbart eine Maus, deren Kugel reibschlüssig mit zwei zueinander orthogonalen Achsen reibschlüssig verbunden ist Das periodisch erhöhte Bremsmoment wird hier entweder duch einen auf die Kugel drückenden Stempel oder durch eine mit jeder der Drehachsen verbundene elektromagnetisch wirkende Spule ereugt.

### Vorteile der Erfindung

Die erfindungsgemäße Bedienvorrichtung mit den Merkmalen des Hauptanspruchs hat ermöglicht, dass der Benutzer bei der Bedienung eine gute haptische Rückmeldung erhält, dadurch, daß das zur Bewegung des kugelförmigen Bedienelements erforderliche Drehmoment, beispielsweise in Abhängigkeit eines zu verstellenden Parameters, veränderlich ist. Der Benutzer erhält somit über das aktuell aufzubringende Drehmoment zur Bewegung des kugelförmigen Bedienelements eine haptisch vermittelte Information z. B. über das Maß des gerade zu verstellenden Parameters oder auch darüber, dass er sich beispielsweise innerhalb einer Auswahlliste einem Ende der Auswahlliste nähert. Eine visuelle Überprüfung des zu verstellenden Parameters oder der aktuellen Position innerhalb einer Auswahlliste ist damit entbehrlich. Die erfindungsgemäße Bedienvorrichtung eignet sich damit in besonderer Weise zur Bedienung von Geräten unter solchen Umständen, unter denen eine visuelle Kontrolle der Einstellung nicht möglich oder zumindest erschwert bzw. nicht wünschenswert ist.

Die erfindungsgemäße Bedienvorrichtung eignet sich somit besonders z. B. zur Verwendung in Verbindung mit in Kraftfahrzeugen betriebenen Geräten, wie beispielsweise einer Audioanlage oder einem Navigationsgerät, da der Kraftfahrzeugführer sich bei gleichzeitig sicherer Bedienung der Geräte visuell voll auf den Straßenverkehr konzentrieren kann.

Ein Vorteil der Erfindung gegenüber dem genannte Stand der Technik ist darin zu sehen, daß durch Erhöhung des zur Drehung des kugelförmigen Bedienelements erforderlichen Drehmoments eine Drehung des kugelförmigen Bedienelements um mindestens eine Drehachse blockierbar ist. Damit kann dem Benutzer eine Information beispielsweise darüber vermittelt werden, ob er sich gerade in einer ein- oder zweidimensionalen Auswahlliste befindet.

Eine besonders einfache Ausführungsform der erfindungsgemäßen Bedienvorrichtung ermöglichen Mittel zur Beeinflussung des zur Drehung des kugelförmigen Bedienelements erforderlichen Drehmoments in Form von mindestens einem Stempel, der mit einer vorgebbaren Kraft gegen das kugelförmige Bedienelement gepreßt wird.

Eine besonders vorteilhafte Ausführungsform der Erfindung besteht darin, daß zur Beeinflussung des zur Drehung des kugelförmigen Bedienelements erforderlichen Drehmoments Aktoren vorgesehen sind, die bei Bewegung des kugelförmigen Bedienelements ein der Bewegung des kugelförmigen Bedienelements entgegengesetztes vorgebbares Drehmoment aufbringen.

Mit den genannten Aktoren lassen sich neben einer parameter- oder kontextabhängigen Beeinflussung des zur Bewegung des kugelförmigen Bedienelements erforderlichen Drehmoments auch beispielsweise Rast- bze. Schritteffekte dergestalt realisieren, daß bei einer Auslenkung des kugelförmigen Bedienelements aus einer Ruhelage, z. B. einem bestimmten Menüpunkt innerhalb einer Auswahlliste, dieses automatisch in die nächste stabile Position, also z. B. den nächsten Menüpunkt innerhalb der Auswahlliste, springt. Dies ist beispielsweise dadurch möglich, daß der Aktor nach Auslenkung des kugelförmigen Bedienelements aus der Ruhelage ein Moment zur Weiterbewegung des kugelförmigen Bedienelements in die nächste stabile Position erzeugt.

Eine einfache vorteilhafte Ausführungsform eines Aktors zur Beeinflussung des zur Drehung des kugelförmigen Bedienelements, mit dem auch der beschriebene Rast- bzw. Schritteffekt darstellbar ist, stellt ein Elektromotor mit zugehöriger Ansteuerung dar, an dessen Welle eine reibschlüssig mit dem kugelförmigen Bedienelement verbundene Walze angeordnet ist.

Weiterhin lassen sich mit den genannten Aktoren auch passive Rasteffekte realisieren, so daß bei Stellung des kugelförmigen Bedienelements in einer Ruhelage ein höheres Moment zu Ihrer Bewegung erforderlich ist, als bei einer Stellung in einer Zwischenposition.

Ebenso lassen sich auch aktive Rast- bzw. Schritteffekte realisieren, so daß bei Auslenkung des kugelförmigen Bedienelements aus einer Ruhelage, bzw. eines durch das Bedienelement gesteuerten Zeigers bzw. einer Markierung von einem Punkt innerhalb einer Auswahlliste zunächst ein der Drehbewegung entgegengesetztes Drehmoment, nach Überschreiten einer bestimmten Stellung des Bedienelements bzw. des Zeigers in der Liste jedoch ein mitwirkendes Drehmoment erzeugt wird.

Ein weiterer Vorteil der Erfindung ist außerdem darin zu sehen, daß sich durch eine geeignete Steuerung des Verlaufs des zur Drehung des kugelförmigen Bedienelements erforderlichen Drehmoments die Haptik des Bedienelements an den jeweiligen Kontext anpassen läßt. So kann die Haptik des Bedienelements im einen Fall der eines konventionellen Potentiometers, in einem anderen Fall der eines Inkrementengebers, und in einem letzten Fall beispielsweise der eines Rastschalters mit einer Mehrzahl von Raststellungen angepaßt werden.

### Zeichungen

Ein Ausführungsbeispiels der Erfindung ist in der Zeichnung dargestellt und wird im folgenden näher erläutert.

Es zeigen
Figur 1 ein Blockschaltbild einer erfindungsgemäßen Bedienvorrichtung,
Figur 2 ein den folgenden Darstellungen zugrunde gelegtes kartesisches Koordinatensystem mit den darin eingezeichneten drei translatorischen und rotatorischen Freiheitsgraden,
Figur 3 einen Schnitt durch eine Bedienvorrichtung gemäß einem ersten Ausführungsbeispiel der Erfindung,
Figur 4 eine Draufsicht der Bedienvorrichtung gemäß dem ersten Ausführungsbeispiel,
Figur 5 einen Schnitt durch eine Bedienvorrichtung gemäß einem zweiten Ausführungsbeispiel der Erfindung,
Figur 6 eine Draufsicht der Bedienvorrichtung gemäß dem zweiten Ausführungsbeispiel der Erfindung,
Figur 7 eine alternative Ausführungsform des kugelförmigen Bedienelements in Verbindung mit einem dritten Ausführungsbeispiel der Erfindung,
Figur 8A beispielhaft eine eindimensionale Auswahlliste als Teil einer zweidimensionalen Auswahlliste mit einem Verlauf des zur Bewegung des kugelförmigen Bedienelements 10 erforderlichen Drehmoments als Funktion der Position eines Zeigers bzw. einer Markierung innerhalb der Auswahlliste, und Figur 8B zwei weitere eindimensionale Auswahllisten als Teil derselben zweidimensionalen Auswahlliste mit zugehörigen Drehmomentverläufen.

### Beschreibung der Ausführungsbeispiele

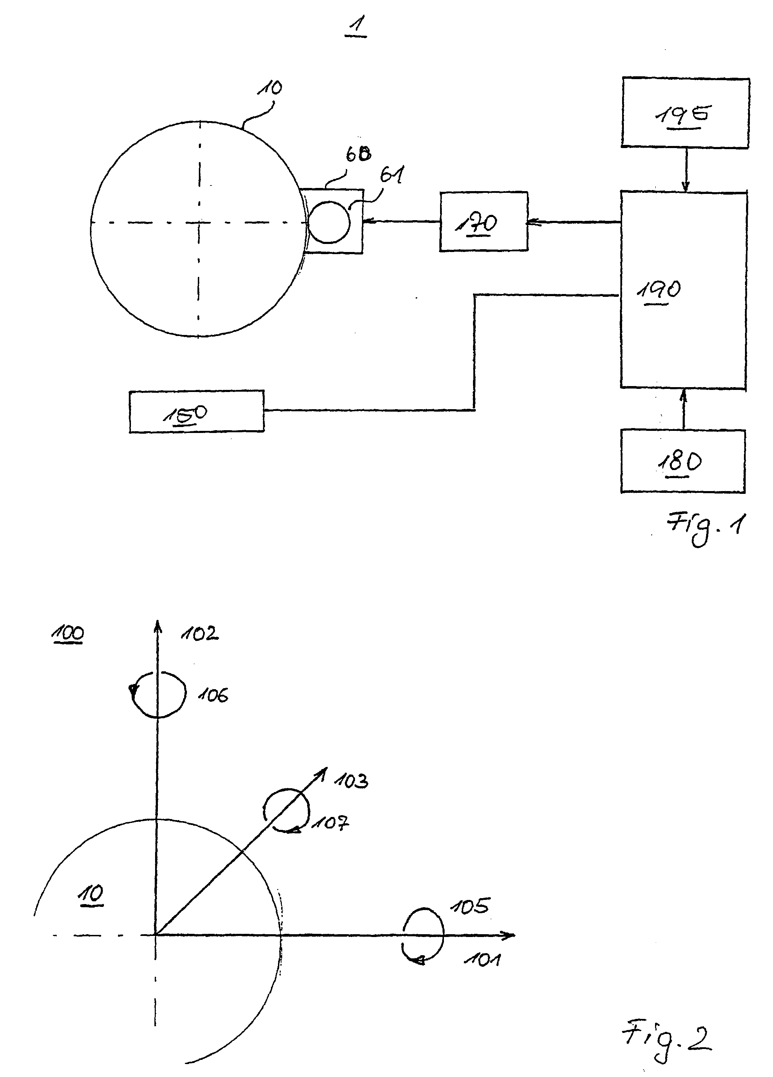

Die erfindungsgemäße Bedienvorrichtung, deren Blockschaltbild in Figur 1 dargestellt ist, besteht im wesentlichen aus einem exakt oder im wesentlichen kugelförmigen Bedienelement 10, einer Erkennungsschaltung 150 zur Feststellung einer Drehung des kugelförmigen Bedienelements 10, sowie zur Feststellung der Drehrichtung und eines überstrichenen Drehwinkels, Mitteln 60, 61 zur Beeinflussung des zur Drehung des kugelförmigen Bedienelements 10 erforderlichen Drehmoments, einer Leistungselektronik 170 zur Ansteuerung der Mittel 160 zur Beeinflussung des Drehmoments in Abhängigkeit der Ausgangssignale einer Steuerung, einem Speicher 180 für Drehmomentkennlinien und einer Steuerung 190 zur Verarbeitung der Ausganggsignale der Erkennungsschaltung 150, zur Zuordnung von Betriebszuständen des zu steuernden Geräts 195 zu im Speicher 180 abgelegten Drehmomentverläufen und zur Ansteuerung der Mittel 160 zur Beeinflussung des Drehmoments über die Leistungselektronik 170.

Zur Erleichterung des Verständnisses ist in Figur 2 das den folgenden Ausführungen zugrunde gelegte kartesische Koordinatensystem 100 mit drei translatorischen Freiheitsgraden 101, 102, 103, entsprechend den drei üblicherweise mit den Buchstaben *x*, *y* und *z* gekennzeichneten Achsen des Koordinatensystems und den drei rotatorischen Freiheitsgraden 105, 106, 107, um die zugehörigen Achsen des Koordinatensystems entsprechend den im folgenden verwendeten Bezeichnungen ϕ_{*x*}, ϕ_{*y*} und ϕ_{*z*} dargestellt.

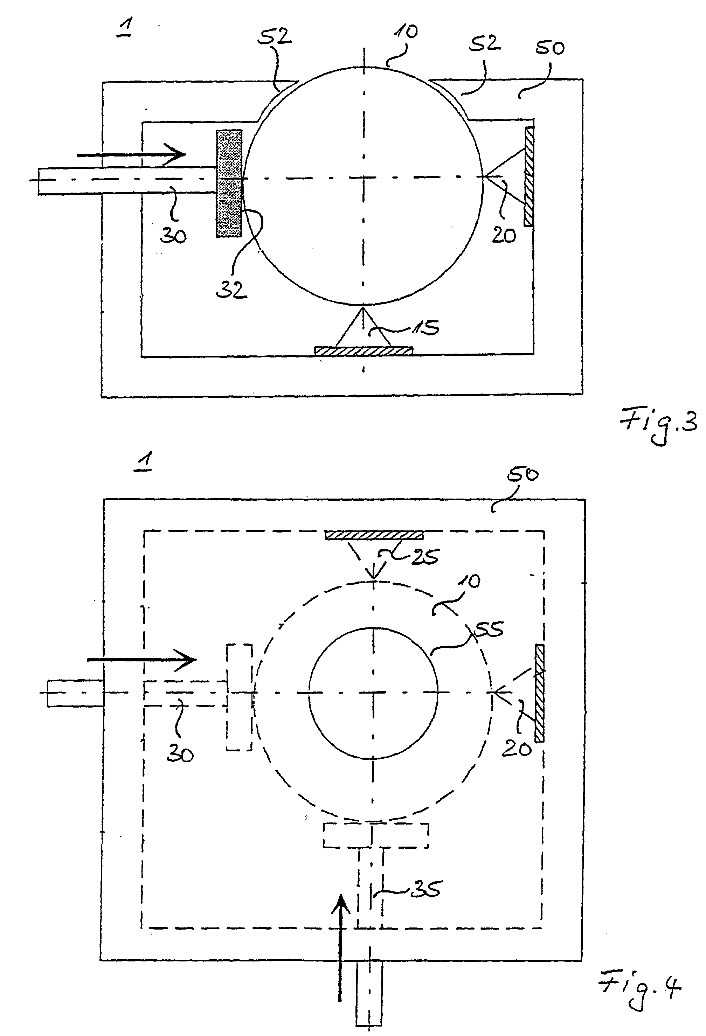

In Figur 3 ist eine Bedienvorrichtung 1 gemäß einem ersten Ausführungsbeispiel der Erfindung, wie sie beispielsweise als Bedienvorrichtung eines Autoradios, z. B. zur Auswahl eines Rundfunkprogramms aus einer Liste von am Fahrzeugstandort empfangbaren Rundfunkprogrammen, Verwendung findet, in Form eines Schnitts dargestellt.

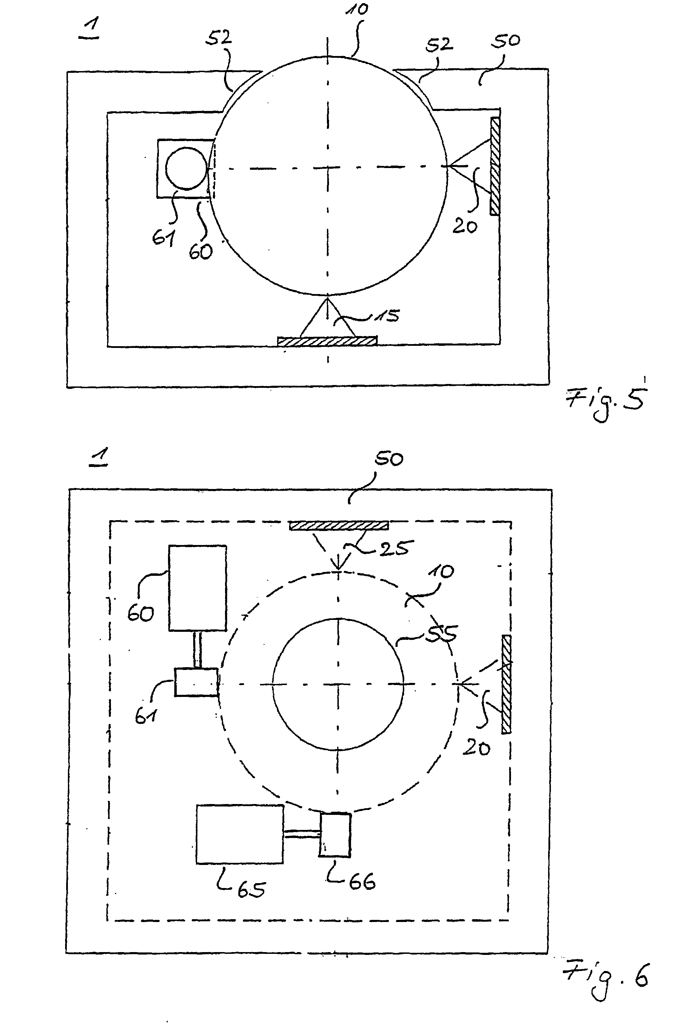

Die Bedienvorrichtung 1 umfaßt ein kugelförmiges Bedienelement 10, das derart in einem Gehäuse 50 gelagert ist, daß eine translatorische Bewegung des kugelförmigen Bedienelements 10 ausgeschlossen ist. Beim vorliegenden Ausführungsbeispiel ist die Lagerung der Kugel 10 durch ein erstes unter der Kugel 10 angeordnetes Lager 15 und den Rand 52 eines in Figur 4 dargestellten kreisförmigen Durchbruchs 55 im Gehäuse 50, durch den die Kugel 10 teilweise hindurchragt, realisiert. Die Kugel 10 ist dabei mit geringem Spiel zwischen dem ersten Lager 15 und dem Rand 52 des Gehäusedurchbruchs 55 geführt, so daß eine Drehung der Kugel 10 um ihre drei, in Figur 2 dargestellten, rotatorischen Freiheitsgrade, die Drehachsen ϕ_{*x*}, ϕ_{*y*} und ϕ_{*z*}, möglich ist.

Bei einer anderen Ausführungsform der Erfindung ist die Lagerung der Kugel 10 derart ausgebildet, daß jeweils ein Lager an den Ecken eines die Kugel ausfüllenden gedachten Tetraeders angeordnet ist, so daß die Lager exakt an der Kugeloberfläche zu liegen kommen. In diesem Fall sind beispielsweise drei der insgesamt vier Lager um den runden Durchbruch 55 des Gehäuses herum, das vierte Lager an der Stelle des ersten Lagers 15 angeordnet.

Die Lager können als Kugellager, oder wie im vorliegenden Fall, als Gleitlager ausgeführt sein.

Schließlich ist es auch denkbar, die Lagerung der Kugel 10 in Form eines einzigen Gleitlagers, nämlich eines auf den Durchmesser der Kugel 10 abgestimmten kugelförmigen Innenraums des Gehäuses 50 auszuführen.

Den beschriebenen Ausführungsformen ist der vorzugsweise kreisförmige Gehäusedurchbruch 55 gemeinsam, durch den dem Benutzer ein Zugriff auf das kugelförmige Bedienelement 10 zur Beeinflussung dessen Winkelstellung ermöglicht wird. Das kugelförmige Bedienelement 10 kann dabei in an sich von Computer-Trackballs bekannter Art und Weise durch den Durchbruch 55 hindurch durch den Benutzer von Hand bedient werden. Ebenso ist es jedoch auch möglich, die erfindungsgemäße Bedienvorrichtung 1 in der Art einer an sich bekannten Computermaus mit nach unten zeigendem Gehäusedurchbruch 55 und durch den Durchbruch hindurchragendem kugelförmigen Bedienelement 10 translatorisch über eine ebene Fläche zu führen und durch Reibschluß der Kugel 10 mit der ebenen Fläche eine rotatorische Bewegung des kugelförmigen Bedienelements 10 zu erzeugen.

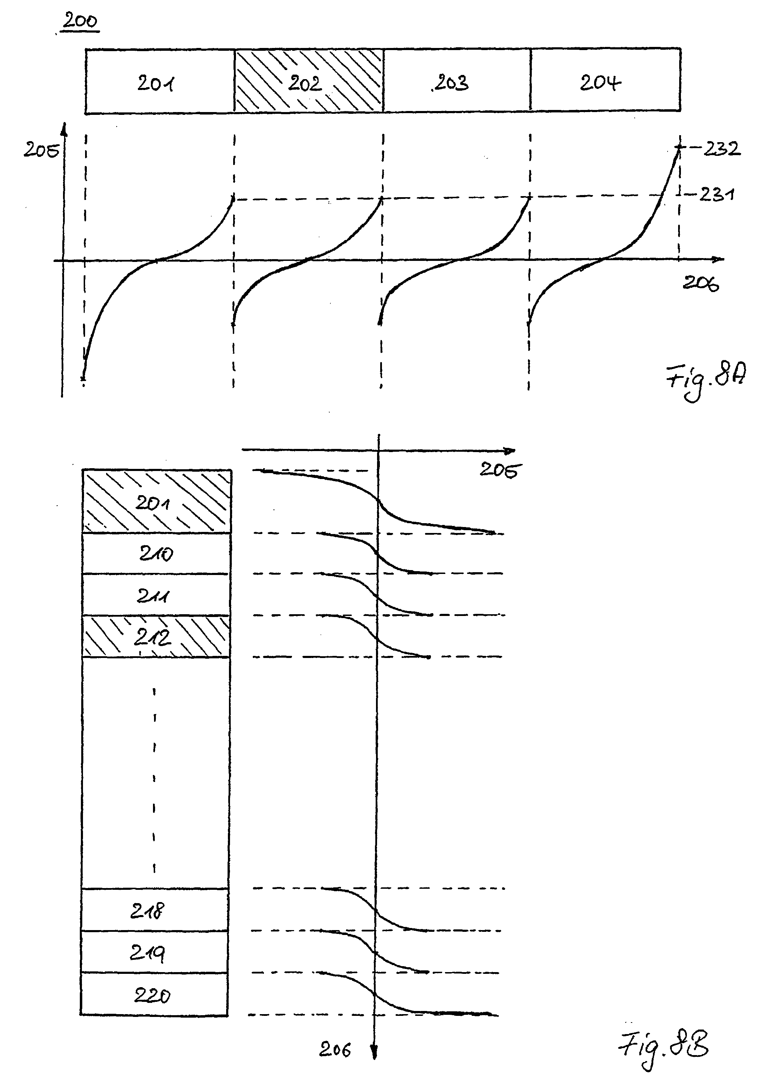

Eine alternative, in Figur 7 dargestellte Ausführungsform des kugelförmigen Bedienelements 10 ist derart ausgebildet, daß sich dieses aus zwei Teilelementen 11 und 12 zusammensetzt, von denen ein jedes auf einer von zwei vorzugsweise im wesentlichen senkrecht zueinander angeordneten Achsen 13 und 14 angeordnet ist. Bei der vorliegenden Ausführungsform ist dabei ein erstes Teilelement 11 des kugelförmigen Bedienelements 10 vorzugsweise in Form einer auf einer horizontal, also parallel zur x-Achse des Koordinatensystems angeordneten Achse 13 befestigten Vollkugel ausgeführt, während das zweite Teilelement 12 als auf einer vertikal verlaufenden zweiten Achse 14 angeordnete Halbkugel ausgeführt ist, die die Vollkugel 13 teilweise, nämlich hier in ihrem unteren Bereich umschließt. Die beiden Achsen 13, 14 sind vorzugsweise gleitgelagert und senkrecht zu den jeweiligen Wandungen des Gehäuses 50 angeordnet. Eine zueinander senkrechte Anordnung der beiden Achsen 13 und 14 ist jedoch nicht zwingend.

Bei dieser Ausführungsform des kugelförmigen Bedienelements 10 ist es gemäß einer vorteilhaften Ausführungsform vorgesehen, daß das erste Teilelement 11 eine vertikal verlaufende Riffelung, das zweite Teilelement 12 ein horizontal verlaufende Riffelung aufweist, welche die Griffigkeit des Bedienelements gerade bei höheren zur Drehung des Bedienelements aufzubringenden Momenten verbessert.

Die Erkennungsschaltung ist in an sich bekannter Weise in Form einer optischen Abtastung der Oberfläche des kugelförmigen Bedienelements und eine zugehörige Auswerteschaltung oder -software realisiert. Dazu weist das von mindestens einer Lichtquelle angestrahlte kugelförmige Bedienelement 10 eine mit dunklen Punkten durchsetzte Oberfläche auf, wobei die dunklen Punkte das von der mindestens einen Lichtquelle abgestrahlte Licht absorbieren, während die übrigen Stellen der Kugeloberfläche das Licht reflektieren. Bei Drehung der Kugel erfassen somit ein oder mehrere lichtempfindliche Aufnehmer Lichtimpulse, aus denen in an sich bekannter Weise eine Information über die Drehrichtung und durch Zählung der Impulse auch über den durch das kugelförmige Bedienelement überstrichenen Winkel abgeleitet wird. Hierzu wird ergänzend beispielhaft auf einen Trackball, z. B. das gemeinhin bekannte Modell "TrackMan Marble FX" der Firma Logitech, verwiesen.

Zur Beeinflussung des zur Drehung der Kugel 10 erforderlichen Drehmoments sind Mittel, im Falle der ersten Ausführungsform des ersten Ausführungsbeispiels gemäß den Figuren 3 und 4, in Form eines Stempels 30 vorgesehen, der horizontal, also von der Seite in *x*-Richtung mit einer vorgebbaren Kraft gegen die Kugel 10 gepreßt wird. Der Stempel 30 weist an seiner der Kugel 10 zugewandten Auflagefläche 32 vorzugsweise eine einen hohen Reibkoeffizienten aufweisende Beschichtung, beispielsweise eine Gummibeschichtung, auf. Wirkt auf den Stempel eine in Richtung der Kugel 10 gerichtete Kraft ein, so stellt sich infolgedessen zwischen Kugel 10 und Stempel 30 eine mechanischen Reibung und damit ein Bremseffekt für die Kugel bezüglich ihrer Drehachsen *y* und *z* ein. Dies bedeutet ein für eine Drehung der Kugel 10 um die *y*- und *z*-Achse, also in ϕ_{*y*} - und ϕ_{*z*}-Richtung erhöhtes erforderliches Drehmoment.

Durch eine Erhöhung der auf den Stempel 30 einwirkenden Andruckkraft über einen bestimmten Schwellwert kann eine Erhöhung des für die Drehung der Kugel 10 um die Drehachsen *y* und *z* erforderlichen Drehmoments bewirkt werden, die faktisch einer Blockierung der Drehachsen *y* und *z* und damit der Drehrichtungen ϕ_{*y*} und ϕ_{*z*} gleichkommt.

Beim vorliegenden Ausführungsbeispiel ist auf der der Stempelangriffsseite gegenüberliegenden Seite der Kugel 10 ein zweites Lager 20 angeordnet, gegen das die Kugel 10 bei auf den Stempel 30 einwirkender Andruckkraft gepreßt wird. Das im vorliegenden Fall an der gegenüberliegenden Gehäusewand angeordnete zweite Lager 20 gewährleistet, daß ein Einfluß einer auf den Stempel 30 einwirkenden Andruckkraft sich nur auf die Drehachsen *y* und *z* der Kugel, nicht jedoch das zur Drehung der Kugel 10 um ihre Drehachse *x* erforderliche Drehmoment auswirkt. Die Kugel 10 bleibt somit bei mit einer Andruckkraft beaufschlagtem Stempel 30 um ihre Drehachse *x* frei drehbar.

Weiter sind beim vorliegenden Ausführungsbeispiel, wie aus Figur 4, der Draufsicht der Bedienungsvorrichtung 1, zu ersehen, analog zum ersten Stempel 30 und zugehörigem Widerlager 20 senkrecht zum ersten Stempel 30 ein zweiter Stempel 35 entlang der *z*-Achse des zugrundegelegten Koordinatensystems sowie an der gegenüberliegenden Gehäusewand ein drittes Lager 25 als Widerlager für die Kugel 10 angeordnet.

Bei alleiniger Beaufschlagung des zweiten Stempels 35 mit einer Andruckkraft entlang der *z*-Achse des zugrundliegenden Koordinatensystems gemäß Figur 2 in Richtung der Kugel 10 stellt sich infolge der zwischen zweitem Stempel 35 und der Kugel 10 wirkenden mechanischen Reibung ein erhöhtes für eine Drehung der Kugel um die Drehachsen *x* und *z* erforderliches Drehmoment ein. In diesem Fall bleibt das Drehmoment für eine Drehung der Kugel 10 um die *y*-Achse, also in ϕ_{*y*}-Richtung unbeeinflußt.

Im Falle einer tetraedrischen Anordnung der Lager zur Abstützung der Kugel 10 kann prinzipiell auf die erwähnten Gegenlager, nämlich das zweite Lager 20 und das dritte Lager 25 verzichtet werden. Jedoch ermöglichen die genannten Gegenlager eine verbesserte Klemmung der Kugel 10 bei einwirkender Andruckkraft eines der Stempel 30 oder 35.

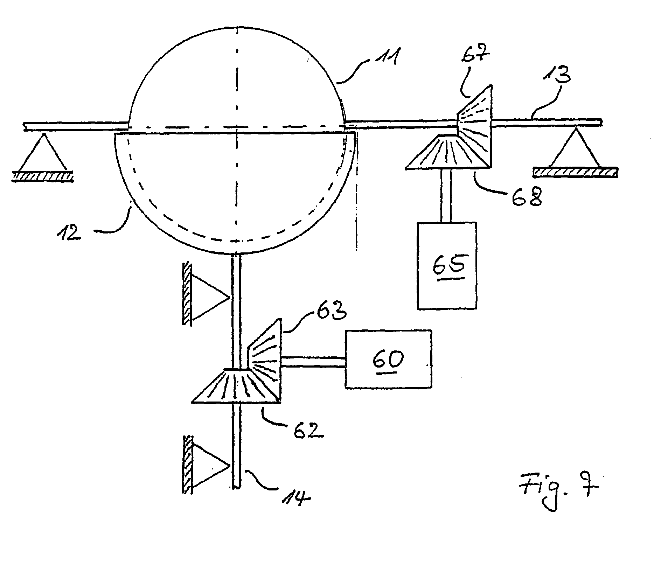

Eine Bedienvorrichtung 1 gemäß einem zweiten Ausführungsbeispiel der Erfindung, wie sie ebenfalls beispielsweise als Bedienvorrichtung eines Autoradios Verwendung findet, ist in Figur 5 in Form eines Schnitts dargestellt.

Bei dem zweiten Ausführungsbeispiel der vorliegenden Erfindung sind die Mittel zur Beeinflussung des zur Bewegung des kugelförmigen Bedienelements 10 erforderlichen Drehmoments anstelle von an die Kugel 10 anpreßbaren Stempeln 30, 35 in Form von Aktoren, also Stellgliedern, ausgebildet. In Figur 5 ist dabei der Aktor, der beim vorliegenden Ausführungsbeispiel den zweiten Stempel 35 ersetzt, der Übersichtlichkeit halber nicht eingezeichnet.

Bei der in Figur 5 dargestellten Ausführungsform des zweiten Ausführungsbeispiels der Erfindung sind die erwähnten Aktoren in Form von Elektromotoren 60 und 65 ausgeführt. Auf den Wellen der Motoren 60 und 65 sind Walzen 61 und 66 angeordnet, deren Drehrichtung parallel zur y-Achse des zugrundeliegenden Koordinatensystems verläuft, und die reibschlüssig mit dem kugelförmigen Bedienelement 10 in Verbindung stehen.

Figur 6 zeigt wiederum eine Draufsicht der in Figur 5 dargestellten Ausführungsform des zweiten Ausführungsbeispiels der Erfindung. Hier sind nochmals die Aktoren in Form der Elektromotoren 60 und 65 dargestellt, auf deren Wellen reibschlüssig mit dem kugelförmigen Bedienelement 10 verbundene Walzen 61 und 66 angeordnet sind, die der Übertragung des von den Elektromotoren 60 und 65 durch geeignete Ansteuerung erzeugten Drehmoments auf das kugelförmige Bedienelement 10 dienen. Die Elektromotoren 60 und 65 und damit die Walzen 61 und 66 sind dabei so angeordnet, daß die Welle des Motors 60 parallel zur y-Achse, die des Motors 65 entlang der x-Achse des zugrunde gelegten Koordinatensystems 100 ausgerichtet ist, so daß die mit dem ersten Motor 60 verbundene Walze 61 ein Drehmoment in ϕ_{*y*}-Richtung, die mit dem zweiten Motor 65 verbundene zweite Walze 66 ein Drehmoment in ϕ_{*x*}-Richtung auf das kugelförmige Bedienelement 10 überträgt.

Das zur Drehung des kugelförmigen Bedienelements 10 aufzuwendende Drehmoment ist über die Aktoren, im vorliegenden Fall die Elektromotoren, dadurch beeinflußbar, daß bei Drehung des kugelförmigen Bedienelements um eine der Drehachsen y oder x der jeweils zugeordnete Aktor ein der Drehbewegung entgegengesetztes oder auch mitdrehendes Drehmoment erzeugt.

Im Falle der vorliegenden Gleichspannungselektromotoren wird das der Drehbewegung entgegengesetzte Drehmoment durch Anlegen einer Gleichspannung erreicht, die eine Drehung der Motorwelle in der der durch den Benutzer aufgeprägten Drehrichtung entgegengesetzten Drehrichtung bewirken würde.

Ein drittes Ausführungsbeispiel der Erfindung ist in Verbindung mit der bereits beschriebenen alternativen Ausführungsform des kugelförmigen Bedienelements 10 in Figur 7 dargestellt.

Gemäß einer ersten, in der Zeichnung nicht dargestellten Ausführungsform des dritten Ausführungsbeispiels sind auf den Achsen 13 und 14, auf denen die Teilelemente 11, 12 des kugelförmigen Bedienelements 10 angeordnet sind, außerhalb des für den Benutzer zugänglichen Bereichs Mittel angeordnet, über die auf mechanische oder elektrische bzw. elektromagnetische Weise ein Bremsmoment auf das jeweilige Teilelement 11, 12 des kugelförmigen Bedienelements übertragbar ist.

Bei einer weiteren Ausführungsform des dritten Ausführungsbeispiels, die in Figur 7 dargestellt ist, stehen die beiden Achsen 13 und 14, auf denen die Teilelemente 11 und 12 des kugelförmigen Bedienelements 10 angeordnet sind, mit Aktoren in Verbindung. Durch geeignete Ansteuerung der Aktoren werden vorgebbare Momente auf das jeweilige Teilelement 11, 12 des kugelförmigen Bedienelements 10 übertragen.

Bei dem in der Figur dargestellten Ausführungsbeispiel sind auf den beiden Achsen 13 und 14, auf denen die Teilelemente 11 und 12 des kugelförmigen Bedienelements 10 angeordnet sind, außerhalb des für den Benutzer zugänglichen Bereichs Zahnräder 62, 67 befestigt, die mit Elektromotoren 60 und 65 in Verbindung stehen, auf deren Wellen wiederum weitere Zahnräder 63 und 68 befestigt sind, die mit den auf den Achsen 13 und 14 angeordneten Zahnrädern 62 und 67 kämmen, so daß durch geeignete Ansteuerung der Elektromotoren 60, 65 vorgebbare Momente auf das jeweilige Teilelement 11, 12 des kugelförmigen Bedienelements 10 übertragbar sind.

Die erwähnte Leistungselektornik hat die Aufgabe, die Mittel zur Beeinflussung des zur Drehung des kugelförmigen Bedienelements erforderlichen Drehmoments, gemäß den beschriebenen Ausführungsbeispiel die Stempel bzw. Aktoren, in Abhängigkeit der von der Steuerung abgegebenen Steuersignale anzusteuern und damit eine Beeinflussung des zur Drehung des kugelförmigen Bedienelements erforderlichen Drehmoments zu bewirken. Die Leistungselektronik umfaßt dazu im wesentlichen Leistungsverstärker zur Umsetzung eines Steuersignals in eine beispielsweise an einen Motor als Aktor anzulegende Spannung und zur Bereitstellung des zur Erzeugung des durch das Steuersignal vorgegebene Drehmoment erforderlichen elektrischen Stroms.

In dem erwähnten Speicher sind Drehmomentverläufe abgelegt, die verschiedenen Betriebszuständen des Geräts, das mit der erfindungsgemäßen Bedienvorrichtung bedient wird, zugeordnet sind. Beispielsweise ist im Speicher ein erster Drehmomentverlauf für die Einstellung der Lautstärke eines Autoradios als zu bedienendem Gerät abgelegt, der sich dadurch auszeichnet, daß beginnend bei niedrigen Drehmomentwerten das für die Drehung des Bedienelements erforderliche Drehmoment mit zunehmender Lautstärke ansteigt. Weiter ist im Speicher beispielsweise ein zweiter Drehmomentverlauf für die Einstellung des Klangs eines wiederzugebenden Audiosignals abgelegt, bei dem ausgehend von einem niedrigen Wert für eine neutrale Klangeinstellung das für die Drehung des Bedienelements erforderliche Drehmoment sowohl bei einer Verstellung zu einer baß- wie auch zu einer höhenlastigeren Wiedergabe zunimmt. Weiterhin ist im Speicher beispielsweise auch ein Drehmomentverlauf zum Blättern in einer horizontal angeordneten Kopfzeile einer zweidimensionalen Auswahlliste, in der die anzuwählenden Parameter bzw. Funktionen aufgeführt sind, abgelegt, der ein Einrasten des Bedienelements bzw. des damit gesteuerten Zeigers oder der Markierung auf die verschiedenen beim Blättern in der Kopfzeile angewählten Parameter bzw. Funktionen bewirkt.

Schließlich ist die Steuerung zur Anpassung des für eine Drehung des kugelförmigen Bedienelements erforderlichen Drehmoments an einen bestimmten Kontext, also beispielsweise zur Vorgabe eines konstanten Drehmoments zur Verstellung von Parametern vorgesehen. Dazu liest die Steuerung in Abhängigkeit des zu verstellenden Parameters oder einer zu verstellenden Funktion aus dem Speicher einen Drehmomentverlauf aus und steuert den Wert des auf das kugelförmige Bedienelement vom Benutzer aufzubringenden Drehmoments entsprechend der aktuellen Position eines Zeigers bzw. einer Markierung in der jeweiligen Auswahlliste.

Bei einer ersten Ausführungsform wird bei einer Drehbewegung des kugelförmigen Bedienelements 10, beispielsweise bei einem Blättern von einem ersten zu einem zweiten Punkt innerhalb einer Auswahlliste eine Rastfunktion für das kugelförmige Bedienelement realisiert, so daß sich hinsichtlich des für die Drehung des Bedienelements erforderlichen Drehmoments ein Einrasten auf den Punkten der Auswahlliste erzielt wird. Dazu wird das Drehmoment des kugelförmigen Bedienelements 10 abhängig von der Position eines Zeigers oder einer Markierung innerhalb einer Auswahlliste dahingehend beeinflußt, daß zur Auslenkung der Kugel aus einer Position, die einem Punkt der Auswahlliste entspricht, ein hohes Moment erforderlich ist, während bei Stellung des Zeigers zwischen zwei Punkten ein niedrigeres Moment ausreicht. Somit wird der Benutzer bei Auslenken der Kugel 10 zur Verschiebung des Zeigers bzw. der Markierung innerhalb der Auswahlliste von einem Punkt ein hohes Moment überwinden müssen. Läßt nach Verlassen des Punktes das Moment nach, so wird der Benutzer, der sich auf dieses Nachlassen des Moments nicht instantan einstellen kann, das Bedienelement unwillkürlich in die Richtung der ursprünglichen Auslenkung weiterbewegen, bis ein neuer Punkt erreicht ist, an dem zum Weiterbewegen der Kugel 10 erneut ein hohes Moment aufzubringen wäre. Aufgrund des beschriebenen Momentenverlaufs ergibt sich somit für die Kugel ein Rasteffekt auf den zugeordneten Punkten der Auswahlliste.

Bei einer weiteren Ausführungsform des zweiten Ausführungsbeispiels ist eine aktive Springfunktion der Kugel realisiert, dergestalt, daß nach Auslenkung der Kugel aus einer Position, die einem Punkt in der Auswahlliste entspricht, zunächst ein der Bewegung entgegenwirkendes Moment erzeugt wird, das solange ansteigt, bis der nächste in der Auswahlliste liegende Punkt der augenblicklichen Position des mit der Kugel gesteuerten Zeigers in der Auswahlliste näher liegt, als der zuvor eingestellte Punkt. Sobald sich der Zeiger dem angesteuerten Punkt in der Auswahlliste weiter nähert, wird das auf das kugelförmige Bedienelement wirkende Moment so gesteuert, daß die Kugel auch ohne Einwirken des Benutzers weiterdreht, d. h. springt, bis der Zeiger den nächsten Punkt in der Auswahlliste erreicht hat.

Bei dem mit der erfindungsgemäßen Bedienvorrichtung zu bedienenden Gerät handelt es sich bei dem Beispiel der Figur 8 um ein Autoradio mit verschiedenen verstellbaren Parametern und Funktionen, wie z. B. einer Liste von am Empfängerstandort empfangbaren Rundfunkprogrammen, der Wiedergabelautstärke, einer Klangeinstellung und anderen Parametern. Die dazu auf einer Anzeigevorrichtung des zu bedienenden Geräts dargestellte Auswahlliste ist in von Computerprogrammen an sich bekannter Weise als zweidimensionale Auswahlliste angelegt.

In Form einer Kopfzeile der hier zweidimensional angelegten Auswahlliste 200 sind die anwählbaren Parameter bzw. Funktionen, nämlich eine Programmeinstellung 201, eine Lautstärkeverstellung 202 und eine Klangverstellung in Form einer sogenannten Klangwaage 203, sowie eine weitere Funktion 204, beispielsweise ein Quellenumschalter zur Wahl einer Audiosignalquelle, wie eines eingebauten Kassettengeräts, eines angeschlossenen CD-Abspielgeräts und eben des Rundfunkempfängers nebeneinander dargestellt. Die verschiedenen genannten Parameter und Funktionen können durch Drehung des kugelförmigen Bedienelements 10 um die y-Achse angewählt werden. Um Fehlbedienungen zu vermeiden wird bei einem Rollvorgang innerhalb der beschriebenen Kopfzeile mittels des kugelförmigen Bedienelements 10 dessen rotatorischer Freiheitsgrad um die x-Achse des zugrundeliegenden Koordinatensystems blockiert. Dies wird dadurch erreicht, daß der zweite Stempel 35 mit hoher Kraft in positiver y-Richtung gegen die Kugel 10 gepreßt wird. Dadurch stellt sich zwischen dem kugelförmigen Bedienelement 10 und dem zweiten Stempel 35 bezüglich einer Drehung um die x-Achse ein hohes Bremsmoment ein, das praktisch einer Blockierung der Drehung der Kugel 10 um die x-Achse gleichkommt.

Wie aus Figur 8A zu entnehmen, ist der Kopfzeile 200 als Auswahlliste ein innerhalb eines Listenpunktes 201 bis 204 annähernd tangensförmiger Verlauf des Drehmoments 205 in Abhängigkeit der Position 206 innerhalb der Auswahlliste derart zugeordnet, daß bei Stellung der Markierung auf einem Listenpunkt ein geringes, bei Verschiebung der Markierung in Richtung eines benachbarten Listenpunktes 201 bis 204 ein betragsmäßig bis auf einen ersten Wert 231 ansteigendes erforderliches Drehmoment zugeordnet wird. In dem dargestellten Diagramm ergibt sich dabei bei Drehung des Bedienelements um die y-Achse in positiver Richtung, also bei Verschiebung der Markierung (Schraffur) von links nach rechts bei Auslenkung von dem aktuellen Listenpunkt ein zunächst ansteigendes Drehmoment 205. Ist die Grenze zum benachbarten Listenpunkt überschritten, ergibt sich ein negatives, also mitdrehendes Moment, so daß die Kugel automatisch soweit weitergedreht wird, bis sich die damit bewegte Markierung auf dem nächsten Listenpunkt, hier dem Punkt 203, befindet. Entsprechend ergibt sich bei umgekehrter Drehrichtung von rechts nach links ein betragsmäßig ansteigendes Bremsmoment, bis die Grenze zum nächsten Punkt 201 überschritten wird, wonach sich die Richtung des einwirkenden Drehmoments umkehrt und somit auf die Kugel mitdrehend wirkt. Das negative Vorzeichen des Drehmomentverlaufs bei Bewegung in negativer Drehrichtung um die y-Achse resultiert aus der negativen Richtung des vektoriellen, also nicht betragsmäßig aufgetragenen auf die Kugel einwirkenden Drehmoments.

Außerdem ist zum Anfang und zum Ende der Auswahlliste, hier also der Kopfzeile 200, innerhalb des ersten bzw. des letzten Listenpunkts 201 bzw. 204 ein weiterer betragsmäßiger Anstieg des für die Drehung des kugelförmigen Bedienelements erforderlichen Drehmoments auf einen zweiten Wert 232, der größer als der erste Wert 231 ist, vorgesehen, so daß dem Bediener eine zusätzliche Information darüber vermittelt wird, daß er sich bei der Bewegung der Kugel 10 dem Anfang bzw. Ende der Auswahlliste 200 nähert.

Ist nun einer der zu verstellenden Parameter bzw. Funktionen 201 bis 204 durch Drehung des kugelförmigen Bedienelements um seine y-Achse angewählt worden, so kann der ausgewählte Parameter bzw. die ausgewählte Funktion 201, 202, 203 oder 204 durch Drehung des kugelförmigen Bedienelements 10 um seine x-Achse verstellt werden. So kann unter Punkt 201 aus einer Liste der am Empfängerstandort empfangbaren Rundfunkprogramme 210, 211, ..., 220 durch Blättern in der Liste durch Drehung des kugelförmigen Bedienelements 10 um seine x-Achse ein gewünschtes Programm ausgewählt werden. Wie Figur 8B zu entnehmen, ist dabei zur Drehung der Kugel ein wie im Zusammenhang mit Figur 8A beschriebener, schwankender Drehmomentverlauf von einem Listeneintrag zum nächsten vorgesehen, so daß sich ein Rasten der Kugel dann ergibt, wenn die durch die Kugel 10 gesteuerte Markierung, die in der Figur durch die Schraffur gekennzeichnet ist, auf, einem Listeneintrag steht. Um die Markierung mittels des kugelförmigen Bedienelements zu verschieben, ist somit ein betragsmäßig erhöhtes Moment erforderlich.

Weiterhin ist es vorgesehen, daß das erforderliche Drehmoment zum Anfang und zum Ende der Programmliste 210 bis 220 betragsmäßig stark ansteigt, so daß dem Bediener eine Information darüber vermittelt wird, daß er den Beginn oder das Ende der Liste erreicht hat. Überwindet der Bediener das erhöhte Moment am Anfang der Liste und dreht das kugelförmige Bedienelement 10 weiter in negativer *ϕ*_{*x*}-Richtung, so rastet die Markierung wieder auf Punkt 201 der Kopfzeile ein.

Analog kann beispielsweise unter dem ausgewählten Punkt 203 der Klang des Autoradios innerhalb eines Wertebereichs 230, 231, ..., 250 von einem höhen- zu einem baßlastigen Klang verschoben werden, wobei beispielsweise der Wert 240 einen neutralen Klang repräsentiert. Während der Verstellung eines ausgewählten Parameters ist es wiederum vorgesehen, daß eine Drehung des kugelförmigen Bedienelements um die y-Achse durch Blockierung dieses rotatorischen Freiheitsgrades unterbunden wird. Damit wird verhindert, daß beispielsweise während der Verstellung der Wiedergabelautstärke durch unbeabsichtigten Drehen der Kugel um die y-Achse statt des Klangs unbeabsichtigt der eingestellte Sender oder auch die Lautstärke verändert wird, da durch Unterbindung der Drehung des kugelförmigen Bedienelements 10 um seine y-Achse ein unbeabsichtigter Wechsel zu einem der anderen Parameter 201, 202 oder 204 praktisch ausgeschlossen ist.

Hinsichtlich der mit der erwähnten Klangwaage vorzunehmenden Klangeinstellung 203 wird die auf den ersten Stempel 30 einwirkende Kraft und damit das auf die Kugel 10 wirkende Bremsmoment derart gesteuert, daß bei einer neutralen Klangeinstellung um den Wert 240 das zur Drehung der Kugel 10 erforderliche Drehmoment minimal wird, so daß sich ein Rasten der Kugel 10 bei einer neutralen Klangeinstellung ergibt, während es bei Verstellung des Klangs in Richtung einer höhenlastigeren Wiedergabe, also kleineren Werten, sowie zu einer baßlastigeren Wiedergabe, also höheren Werten, zunimmt. Schließlich nimmt das für die Drehung der Kugel 10 erforderliche Drehmoment gegen Ende und Anfang der Klangwaage sprungartig zu, so daß auch hier dem Bediener eine Information über das Ende des Einstellbereichs vermittelt wird.

Während die Rastfunktion bezüglich des für die Drehung der Kugel erforderlichen Drehmoments auch in Verbindung mit den Stempeln des ersten Ausführungsbeispiels möglich ist, ist das Springen der Kugel von einer Auslenkung zur nächsten Rastposition nur in Verbindung mit den Aktoren des zweiten Ausführungsbeispiels realisierbar.

Bei sowohl dem ersten, wie auch dem zweiten Ausführungsbeispiel ist es vorgesehen, daß zur Steuerung des zur Drehung des kugelförmigen Bedienelements erforderlichen Drehmoments die Ist-Position der Kugel bzw. die dieser zugeordnete Position eines Zeigers oder einer Markierung innerhalb einer Auswahlliste bestimmt wird, und dieser Ist-Position ein bestimmtes Drehmoment zugeordnet wird. Dazu sind zu jeder Position Drehmomentwerte in einer Tabelle abgelegt, die in Abhängigkeit der Ist-Position der Kugel bzw. des Zeigers ausgelesen werden und zur Steuerung der Stempel 30, 35 des ersten Ausführungsbeispiels bzw. den Aktoren 60, 61 und 65, 66 des zweiten Ausführungsbeispiels und damit zur Aufprägung des Bremsmoments, bzw. im Falle des Springens der Kugel auch des aktiven Drehmoments, auf das kugelförmige Bedienelement 10 verwendet werden.

Ein weiterer Anwendungsfall für das erfindungsgemäße Bedienelement ist beispielsweise dessen Verwendung als Mittel zur Eingabe eines Navigationsziels bei einem Fahrzeugnavigationsgerät. Auf einer Anzeigeeinheit des Navigationsgeräts ist zur Zieleingabe eine Landkarte beispielsweise mit einer Mehrzahl von Städten als möglichen Navigationszielen dargestellt. Ein Cursor ist zur Markierung eines Navigationsziels auf der Karte mittels des Bedienelements vor dem Hintergrund der Kartendarstellung in x- und y-Richtung verschiebbar. Dabei ist es beispielsweise vorgesehen, daß das auf das kugelförmige Bedienelement einwirkende Drehmoment derart gesteuert wird, daß die Kugel in den beiden Dimensionen mit konstantem Moment drehbar ist, während sich ein Einrasten des Bedienelements auf in der Karte eingetragenen Städten als potentiellen Navigationszielen ergibt. Somit muß die durch das steuerbare Drehmoment vorgegebene Schrittweite oder Rasterung des Bedienelements nicht konstant sein, sondern kann auch, beispielsweise im Falle der auf der Karte dargestellten Städte, in Abhängigkeit deren Lage und Entfernung flexibel gesteuert werden.

## Patentansprüche

1. Bedienvorrichtung für ein elektrisches Gerät mit einem kugelförmigen Bedienelement zur Zeigersteuerung, das um mindestens eine Achse drehbar gelagert ist,
wobei Mittel (30, 35) zur Beeinflussung des zur Drehung des kugelförmigen Bedienelements (10) um die mindestens eine Achse (101) erforderlichen Drehmoments vorgesehen sind,
wobei eine Beeinflussung des für die Drehung des kugelförmigen Bedienelements (10) erforderlichen Drehmoments derart vorgesehen ist, dass das Drehmoment abhängig von der Stellung des Zeigers in einem Kontext beeinflußt wird,
**dadurch gekennzeichnet,**
**dass** abhängig vom Kontext durch Erhöhung des für die Drehung des kugelförmigen Bedienelements (10) erforderlichen Drehmoments (205) mindestens einer des mindestens einen rotatorischen Freiheitsgrads des kugelförmigen Bedienelements blockierbar ist, so dass dem Bediener taktil die im jeweiligen Kontext vorhandenen Freiheitsgrade zur Steuerung des Zeigers vermittelbar sind.

2. Bedienvorrichtung nach Anspruch 1, **dadurch gekennzeichnet, dass** der Kontext eine mindestens eindimensional angelegte Auswahlliste (200) ist,
und dass eine Beeinflussung des für die Drehung des kugelförmigen Bedienelements (10) erforderlichen Drehmoments (205) derart vorgesehen ist, dass bei Bewegung des Zeigers zum Rand der Auswahlliste hin eine Erhöhung des Drehmoments bewirkt wird.

3. Bedienvorrichtung nach Anspruch einem der vorhergehenden Ansprüche, **dadurch gekennzeichnet, dass** die Mittel zur Beeinflussung des zur Drehung des kugelförmigen Bedienelements erforderlichen Drehmoments in Form mindestens eines Stempels (30) ausgeführt sind, der mit einer vorgebbaren Kraft gegen das kugelförmige Bedienelement (10) gepreßt wird.

4. Bedienvorrichtung nach einem der vorhergehenden Ansprüche, **dadurch gekennzeichnet, dass** die Mittel zur Beeinflussung des zur Drehung des kugelförmigen Bedienelements erforderlichen Drehmoments in Form mindestens eines Aktors (60, 61) realisiert sind, die bei Bewegung des kugelförmigen Bedienelements (10) ein der Bewegung des kugelförmigen Bedienelements (10) entgegengesetztes vorgebbares Drehmoment aufbringen.

5. Bedienvorrichtung nach Anspruch 4, **dadurch gekennzeichnet, dass** der mindestens eine Aktor in Form eines Elektromotors (60) mit zugehöriger Ansteuerung (170) realisiert ist, an dessen Welle eine reibschlüssig mit dem kugelförmigen Bedienelement verbundene Walze (61) angeordnet ist.

6. Bedienvorrichtung nach einem der vorhergehenden Ansprüche, **dadurch gekennzeichnet, dass** durch Erhöhung des zur Drehung des kugelförmigen Bedienelements (10) erforderlichen Drehmoments eine Drehung des kugelförmigen Bedienelements um mindestens eine der mindestens einen Drehachse (101) blockierbar ist.

7. Bedienvorrichtung nach einem der vorhergehenden Ansprüche, **dadurch gekennzeichnet, dass** das kugelförmige Bedienelement (10) ein erstes um eine erste Achse (13) drehbares Teilelement (11) und ein zweites um eine zweite Achse (14) drehbares Teilelement (12) aufweist, und dass die zweite Achse (14) im wesentlichen senkrecht zu der ersten Achse (13) angeordnet ist.

8. Bedienvorrichtung nach Anspruch 7, **dadurch gekennzeichnet, dass** das erste Teilelement (11) in Form einer Kugel, das zweite Teilelement (12) als das erste Teilelement (11) teilweise umschließende, zumindest annähernde, Halbkugel ausgebildet ist.

## Claims

1. Control apparatus for an electrical appliance having a spherical control element for pointer control which is mounted so that it can rotate around at least one axis,
where means (30, 35) are provided for influencing the torque required to rotate the spherical control element (10) around the at least one axis (101),
where provision is made for the torque required to rotate the spherical control element (10) to be influenced such that the torque is influenced independently of the position of the pointer in one context,
**characterized**
**in that**, depending on the context, increasing the torque (205) required to rotate the spherical control element (10) allows at least one of the at least one rotary degrees of freedom of the spherical control element to be blocked, so that the degrees of freedom available for controlling the pointer in the respective context can be conveyed to the user by touch.

2. Control apparatus according to Claim 1, **characterized in that** the context is a selection list (200) created at least in one dimension,
and **in that** provision is made for the torque (205) required to rotate the spherical control element (10) to be influenced such that the torque is increased when the pointer is moved towards the edge of the selection list.

3. Control apparatus according to one of the preceding claims, **characterized in that** the means for influencing the torque required to rotate the spherical control element are in the form of at least one stamp (30) which is pressed against the spherical control element (10) using a prescribable force.

4. Control apparatus according to one of the preceding claims, **characterized in that** the means for influencing the torque required to rotate the spherical control element are in the form of at least one actuator (60, 61), which apply a prescribable torque opposed to the movement of the spherical control element (10) when the spherical control element (10) is moved.

5. Control apparatus according to Claim 4, **characterized in that** the at least one actuator is in the form of an electric motor (60) with an associated actuating means (170), the shaft of said electric motor holding a roller (61) which is connected to the spherical control element with frictional engagement.

6. Control apparatus according to one of the preceding claims, **characterized in that** increasing the torque required to rotate the spherical control element (10) allows blocking of rotation of the spherical control element around at least one of the at least one rotation axes (101).

7. Control apparatus according to one of the preceding claims, **characterized in that** the spherical control element (10) has a first subelement (11), which can rotate around a first axis (13), and a second subelement (12), which can rotate around a second axis (14), and **in that** the second axis (14) is arranged essentially at right angles to the first axis (13).

8. Control apparatus according to Claim 7, **characterized in that** the first subelement (11) is in the form of a sphere, the second subelement (12) is in the form of an at least approximate hemisphere partially surrounding the first subelement (11).

## Revendications

1. Dispositif de manoeuvre pour un appareil électrique avec un élément de manoeuvre sphérique pour commander un pointeur logé de façon à pouvoir tourner autour d'au moins un axe, des moyens (30, 35) étant prévus pour agir sur le couple de rotation nécessaire à la rotation de l'élément de manoeuvre (10) sphérique autour de l'axe (101) au moins une action sur le couple de rotation nécessaire à la rotation de l'élément de manoeuvre (10) sphérique étant prévue de telle manière que le couple de rotation est influencé en fonction de la position du pointeur dans un contexte,
**caractérisé en ce qu'**
en augmentant le couple de rotation (205) nécessaire à la rotation de l'élément de manoeuvre (10) sphérique en fonction du contexte, au moins l'un des degrés de liberté en rotation - au moins au nombre d'un - de l'élément de manoeuvre sphérique peut être bloqué de telle manière qu'on peut procurer tactilement à l'utilisateur les degrés de liberté disponibles dans le contexte concerné et destinés à commander le pointeur.

2. Dispositif de manoeuvre selon la revendication 1,
**caractérisé en ce que**
le contexte est une liste de sélection (200) présentée au moins en une dimension et une action sur le couple de rotation (205) nécessaire à la rotation de l'élément de manoeuvre (10) sphérique est prévue de telle manière que le couple de rotation augmente lorsqu'il y a un mouvement du pointeur vers le bord de la liste de sélection.

3. Dispositif de manoeuvre selon l'une des revendications précédentes,
**caractérisé en ce que**
les moyens pour agir sur le couple de rotation nécessaire à la rotation de l'élément de manoeuvre sphérique sont réalisés sous forme d'au moins un poinçon (30) qui est poussé contre l'élément de manoeuvre (10) sphérique selon une force prédéterminée.

4. Dispositif de manoeuvre selon l'une des revendications précédentes,
**caractérisé en ce que**
les moyens destinés à agir sur le couple de rotation nécessaire à la rotation de l'élément de manoeuvre sphérique sont réalisés sous forme d'un actionneur (60, 61), lesquels appliquent un couple de rotation pré-déterminable contraire au mouvement de l'élément de manoeuvre sphérique (10) lors du mouvement de l'élément de manoeuvre sphérique (10).

5. Dispositif de manoeuvre selon la revendication 4,
**caractérisé en ce que**
l'actionneur au moins au nombre d'un est réalisé sous forme d'un moteur électrique (60), avec une commande (170) correspondante, sur l'arbre duquel est placé en étant entraîné par friction un cylindre (61) relié à l'élément de manoeuvre sphérique.

6. Dispositif de manoeuvre selon l'une des revendications précédentes,
**caractérisé en ce qu'**
il est possible de bloquer une rotation de l'élément de manoeuvre sphérique autour d'au moins l'un des axes de rotation (101) en augmentant le couple de rotation nécessaire à la rotation de l'élément de manoeuvre sphérique (10).

7. Dispositif de manoeuvre selon l'une des revendications précédentes,
**caractérisé en ce que**
l'élément de manoeuvre sphérique (10) présente un premier élément partiel (11) qui peut tourner autour d'un premier axe (13) et un deuxième élément partiel (12) qui peut tourner autour d'un deuxième axe (14), et le deuxième axe (14) est disposé presque perpendiculairement au premier axe (13).

8. Dispositif de manoeuvre selon la revendication 7,
**caractérisé en ce que**
le premier élément partiel (11) a une forme de sphère et le deuxième élément partiel (12) a une forme au moins approximative de demi-sphère qui entoure partiellement le premier élément partiel (11).
